# FASCICULE DE BREVET EUROPEEN

(11) **EP 2 820 872 B1**
(45) Date de publication et mention de la délivrance du brevet: **30.08.2017**
(21) Numéro de dépôt: 13706050.5
(22) Date de dépôt: 27.02.2013
(51) Int. Cl.: H04W 8/08, H04W 76/02, H04W 84/12

(54) **GESTION DE LA MOBILITÉ D'UN RÉSEAU MOBILE**
MOBILITÄTSMANAGEMENT EINES MOBILFUNKNETZES
MOBILITY MANAGEMENT OF A MOBILE NETWORK

(30) Priorité: 28.02.2012 FR 1251777
(43) Date de publication de la demande: 07.01.2015
(73) Titulaire: Commissariat à l'Énergie Atomique et aux Énergies Alternatives, 75015 Paris (FR)
(72) Inventeur: PETRESCU, Alexandru, F-91400 Orsay (FR); BOC, Michael, F-92140 Clamart (FR); JANNETEAU, Christophe, F-28210 Chaudon (FR)
(74) Mandataire: Lopez, Frédérique
(86) Numéro de dépôt international: PCT/EP2013/053966
(87) Numéro de publication internationale: WO 2013/127879

(56) Documents cités:
- EP-A1- 2 161 882
- EP-A1- 2 203 005
- US-A1- 2011 032 874

## Description

### Domaine de l'invention

L'invention concerne les réseaux mobiles et plus particulièrement la mobilité de tels réseaux mobiles dans un environnement Proxy Mobile IPV6.

### Etat de la Technique

La mobilité Internet Protocol (Mobile Internet Protocol MIP en anglais) est un protocole de communication qui permet à un utilisateur d'un terminal indépendant ou d'un équipement utilisateur (respectivement Mobile Host MH ou User Equipment UE en anglais) de se déplacer avec la même adresse IP depuis un réseau IP origine (réseau mère ou Home Network HN en anglais) vers un autre réseau IP (réseau visité ou Foreign Network en anglais) en conservant ses connections actives. La mobilité d'un MH est gérée par le MH lui-même et par des entités fixes des réseaux qui mettent à jour certaines structures de données relatives à l'adresse IP unique « Home Address ou HoA en anglais » pour le MH. Quand le protocole utilisé est Proxy MIP (PMIP), les données sont relatives au préfixe utilisé pour former une adresse.

Quand un MH change de point d'attachement, et que Proxy MIP est utilisé, les entités fixes réassignent au point d'attachement cible le même préfixe IP que celui du point d'attachement source. Le MH ne voit alors aucune modification au niveau d'adresse IP et ses sessions IP n'ont pas besoin d'être relancées.

Un réseau IP au sein duquel la mobilité des équipements MH est gérée par le protocole Proxy Mobile IP est appelé un domaine de mobilité proxy ou Proxy Mobile IP en anglais (PMIP). La mobilité proxy est spécifiée par l'Internet Engineering Task Force (IETF) dans différents documents de 'Request For Comments' (RFC). En particulier, la RFC 5213 définit le protocole Proxy Mobile IPv6 (PMIPv6) auquel il peut être fait référence comme état de l'art actuel de la mobilité Proxy. Cette RFC utilise le terme Mobile Noeud (MN) au lieu de (MH) pour désigner le même élément. Cette RFC est disponible par exemple à l'adresse internet http://www.rfc-editor.org/rfc/rfc5213.txt.

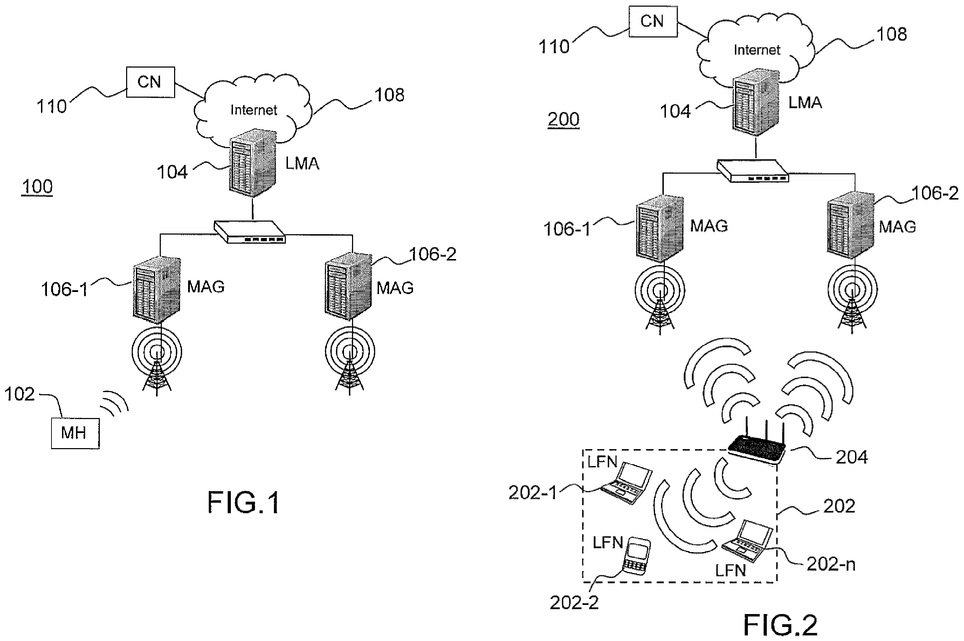

La figure 1 illustre une architecture générale d'un domaine PMIPv6 (100). La spécification de PMIPv6 définit l'utilisation de deux types d'entités localisées dans le réseau pour la gestion de la mobilité des MHs (102): le point d'attachement « Local Mobility Anchor ou LMA en anglais» (104) et le routeur d'accès « Mobile Access Gateway ou MAG en anglais» (106-1, 106-2).

Le LMA (104) est localisé sur un serveur central qui permet d'accéder par exemple à un réseau Internet (108). Son rôle est de gérer l'état des sessions des MHs, des préfixes IPv6 associés - le « Home Network Prefix ou HNP » en anglais -, des tables de routage et l'établissement de tunnels de communication vers les MAGs.

Le MAG (106-1, 106-2) est localisé sur un routeur IP d'accès du réseau PMIP. Son rôle est, en premier lieu, d'enregistrer la présence d'un MH (102) auprès du LMA (104) par l'émission d'un message de signalisation - « Proxy Binding Update ou PBU en anglais ». Le LMA (104) répond à cette requête par un message d'accusé de réception - « Proxy Binding Acknowledgement ou PBA en anglais ».

Le MAG (106-1) et le LMA (104) établissent des tunnels de communication bidirectionnelle entre eux afin de faire transiter les communications des noeuds.

Le LMA (104) en recevant un message PBU va confirmer ou attribuer un préfixe HNP qui sera transmis au MAG (106-1) par un message PBA. Le préfixe attribué à un MH est ensuite annoncé par le MAG sur le lien existant entre ce MAG (106-1) et le MH (102).

L'autre bout des communications du MH (102) est appelé un noeud correspondant (110) « Correspondent Node ou CN en anglais ». C'est un équipement électronique fixe situé à un endroit arbitraire sur le réseau Internet (108). Il peut être à l'intérieur ou à l'extérieur du domaine PMIP, et il communique avec le MH (102). Cet équipement peut typiquement être un serveur d'applications, tel qu'un serveur Web ou un autre MH quand il est à l'intérieur du domaine PMIP.

Le protocole Proxy Mobile IPv6 permet la mobilité du MH (102) vers un nouveau MAG (106-2), en permettant au LMA (104) d'inscrire une entrée dans sa table de routage « destinations », contenant au moins une paire de variables [HNP, tunnel]. Le LMA (104) transmet les paquets provenant du CN (110) adressés au MH (ayant le préfixe HNP), dans ce tunnel destination. De la même manière, pour le même préfixe HNP, le MAG (106-2) établit une entrée dans sa table de routage « sources », contenant au moins une paire de variables [HNP, tunnel].

On définit une plateforme mobile ou réseau mobile comme un ensemble d'équipements appelés en anglais « Local Fixed Node » (LFN) qui se déplacent ensemble de manière homogène. De tels réseaux mobiles sont par exemple constitués d'une pluralité de terminaux LFNs tels que smartphone, ordinateur portable, ou tablette PC pour les passagers d'un bateau, d'un avion, ou d'une voiture.

Tandis que le protocole Proxy Mobile IPv6 supporte la mobilité des terminaux mobiles indépendants MHs, il n'offre pas le support de la mobilité des réseaux mobiles et un réseau mobile ne peut pas être accueilli dans un domaine Proxy Mobile IPv6. En effet, ce protocole ne gère pas l'attribution de préfixe pour former des adresses IPv6 pour les équipements LFNs compris dans les réseaux mobiles.

La demande de brevet US 2011/0032874 A1 de KIM et al. présente un système (mMAG ou mobile Mobile Access Gateway en anglais) pour supporter des réseaux mobiles dans des domaines Proxy Mobile IPv6. Le système mMAG comprend une entité de génération d'adresses et une entité de communication. La génération d'adresses se fait par attribution d'un préfixe supplémentaire - « Mobile Home Network Prefix ou Mobile HNP en anglais » - et la communication vers les noeuds mobiles se fait par l'envoi de messages additionnels contenant le préfixe, messages nommés « Router Advertisement Messages en anglais ».

Dans une telle approche, des modifications sont apportées sur les entités du réseau coeur, an particulier sur le MAG.

Il existe ainsi le besoin d'une infrastructure Proxy Mobile IP qui supporte la mobilité de plateformes mobiles (ou réseaux mobiles) entières.

Par ailleurs, il existe le besoin d'une telle infrastructure autorisant l'utilisation des réseaux mobiles avec le protocole Proxy Mobile IPv6 qui n'impacte pas les entités de l'infrastructure existante.

La présente invention répond à ce besoin.

### Résumé de l'invention

Un objet de la présente invention est de fournir une méthode pour gérer la mobilité de réseaux mobiles à l'intérieur de domaines PMIPv6.

Un autre objet de la présente invention est de fournir une méthode qui n'implique pas de modification du protocole PMIPv6.

Un objet plus spécifique de la présente invention est de permette une configuration dynamique des adresses de terminaux mobiles rattachés à un réseau mobile.

Un autre objet de la présente invention est de permettre à un terminal mobile à l'intérieur d'un réseau mobile d'obtenir une adresse IP globale et ainsi de communiquer avec un noeud correspondant situé à une position arbitraire dans le réseau Internet, ou situé à l'intérieur du même domaine PMIP.

Un autre objet de la présente invention est d'offrir une communication stable quand un routeur mobile bascule entre deux MAGs.

Avantageusement mais sans limitation, l'invention trouvera des applications dans des systèmes de transports - public ou privé - de sécurité et de défense, de télécommunications.

Pour obtenir les résultats recherchés, une méthode et un système tels que décrits sont proposés.

En particulier, une méthode pour gérer la mobilité d'un réseau mobile opérant dans un environnement Proxy Mobile IP (PMIP) comprenant au moins un point d'attachement et un routeur d'accès est proposée. Le réseau mobile comprend un terminal mobile en communication avec au moins un équipement utilisateur. La méthode comprend les étapes de :
- établir un tunnel de communication IP-en-IP entre lesdits au moins un point d'attachement et routeur d'accès permettant l'échange de données entre le terminal mobile et un noeud correspondant de l'environnement PMIP, le tunnel de communication attribuant un « Home Network Préfix » (HNP) au terminal mobile ;
- diviser (512) le Home Network Prefix attribué en une première partie pour former une « Home Adress » (HoA) pour le terminal mobile (102, 204), et en une ou plusieurs autres parties pour générer un ou plusieurs préfixes (P1,P2), l'un des préfixes définissant un « Mobile Network Prefix » (MNP) attribué au terminal mobile (102,204); et
- annoncer le « Mobile Network Préfix » créé vers ledit au moins un équipement utilisateur de manière à permettre l'échange de données entre ledit au moins un équipement utilisateur et le noeud correspondant par ledit tunnel de communication IP-en-IP.

Différentes variantes d'implémentations sont décrites dans les revendications dépendantes.

### Description des figures

Différents aspects et avantages de l'invention vont apparaitre en appui de la description d'un mode préféré d'implémentation de l'invention mais non limitatif, avec référence aux figures ci-dessous :
La Figure 1 est une représentation topologique d'une architecture classique de domaine PMIPv6;
La Figure 2 est une représentation topologique d'une architecture de réseau comprenant un réseau d'opérateur et un réseau mobile dans laquelle implémenter préférentiellement l'invention ;
La Figure 3 montre un exemple de division du HNP telle qu'opérée par la présente invention;
Les Figures 4a et 4b montrent les tables de routage d'un terminal mobile MH et d'un routeur mobile MR;
La Figure 5 montre sous un schéma de type flot de données, un premier exemple d'échange, qui utilise un lien point-à-point, opérant selon les principes de la présente invention ;
La Figure 6 montre sous un schéma de type flot de données, un second exemple d'échange, qui utilise un lien partagé, opérant selon les principes de la présente invention.

### Description détaillée de l'invention

Bien que la description se base sur l'utilisation du protocole Proxy Mobile IPv6, les principes décrits peuvent être étendus pour un protocole « Proxy Mobile IP » indépendant de la version de l'IP. Ainsi la présente invention trouvera aussi application dans les infrastructures utilisant un protocole PMIPv4 qui alloue des préfixes.

La Figure 2 montre une architecture 200 de réseau mobile opérant sous le protocole PMIPv6 pour illustrer une implémentation de la présente invention. Le réseau mobile (202) est composé d'un ou plusieurs terminaux IP utilisateurs (202-1, 202-2, 202-n) « Local Fixed Node ou LFN en anglais » et d'au moins un terminal mobile « Mobile Host ou MH en anglais » (204).

Les éléments présents sur la figure 1 sont repris avec les mêmes références.

Le terminal mobile (204) est un équipement électronique équipé d'au moins une interface IPv6 capable de s'auto-attribuer une adresse IPv6 globale à partir d'un préfixe IPv6 annoncé par son routeur d'accès, ou bien capable de se voir attribuer une adresse IPv6 en réponse à une demande explicite d'adresse IPv6. Dans le cas de la mobilité d'une plateforme mobile, le terminal mobile gère un réseau mobile (202) à part entière, c'est-à-dire un réseau composé de LFNs. Le terminal mobile est alors nommé routeur mobile « Mobile Router ou MR en anglais », et il est équipé d'au moins deux interfaces IPv6. Comme il a été présenté précédemment, le protocole PMIPv6 ne gère pas la mobilité des réseaux mobiles, car il ne permet que l'attribution d'un préfixe HNP au lien entre le terminal mobile et le réseau mobile. De plus, le protocole ne permet pas l'attribution d'un préfixe qui serait utilisable pour former des adresses IPv6 pour les LFNs. Un tel préfixe pour former des adresses IPv6 pour réseau mobile est appelé « Mobile Network Prefix ou MNP en anglais».

Les terminaux LFNs sont en communication avec le routeur mobile (204), préférentiellement selon un mode de connexion sans-fil (wireless). Les terminaux utilisateurs peuvent être tout équipement portable comme des ordinateurs portables, des smartphones, des notebooks ou Personal Digital Assistant (PDA). Les terminaux LFNs sont des équipements qui ne tournent pas de protocole de gestion de mobilité.

Le routeur mobile (204) possède une première interface IP vers un réseau principal tel que par exemple vers un réseau d'opérateur de télécommunication. Le réseau opérateur contient des entités fixes qui gèrent la mobilité du routeur mobile (204). Certains réseaux opérateurs offrent un accès point-à-point au routeur mobile, tandis que d'autres un accès partagé. La première interface du routeur mobile est dite sortante ou « egress en anglais ». Avantageusement, le routeur mobile (204) possède une seconde interface IP vers le réseau local (202) d'où sont joignables les terminaux LFNs. Cette interface est dite entrante ou « ingress en anglais ».

Les équipements LFNs se déplacent ensemble, de manière homogène. De tels réseaux mobiles peuvent se trouver intégrés dans un avion, un véhicule ou un bateau - chacun représentant une illustration typique de mouvement homogène de plusieurs terminaux pour les passagers, par exemple.

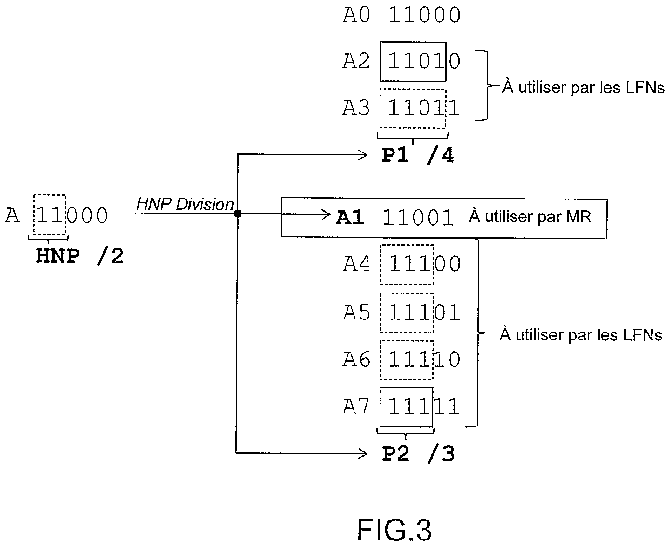

La Figure 3 montre un exemple de division du HNP telle qu'opérée par l'invention. Avantageusement la méthode de la présente invention n'implique aucune extension sur les entités existantes de l'infrastructure Proxy Mobile, que ce soit sur les entités MAG, ou les entités LMA. De surcroît, il n'y a pas d'extension de nouveaux messages PMIPv6.

Ainsi, la méthode proposée consiste à utiliser le préfixe HNP comme élément initial pour former un ou plusieurs préfixes réseau mobile « Mobile Network Prefix ou MNP en anglais » pour le Router Mobile MR et ainsi adresser les terminaux mobiles LFNs. Le Mobile Host opère en mode Routeur Mobile (MR) utilisant deux types d'interface, une interface egress vers le réseau externe et une interface ingress vers le réseau mobile.

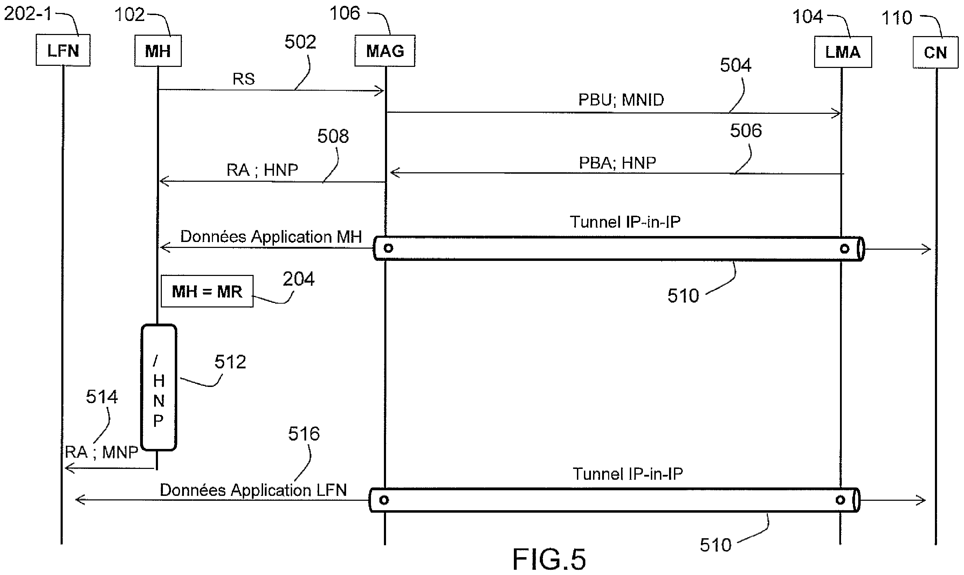

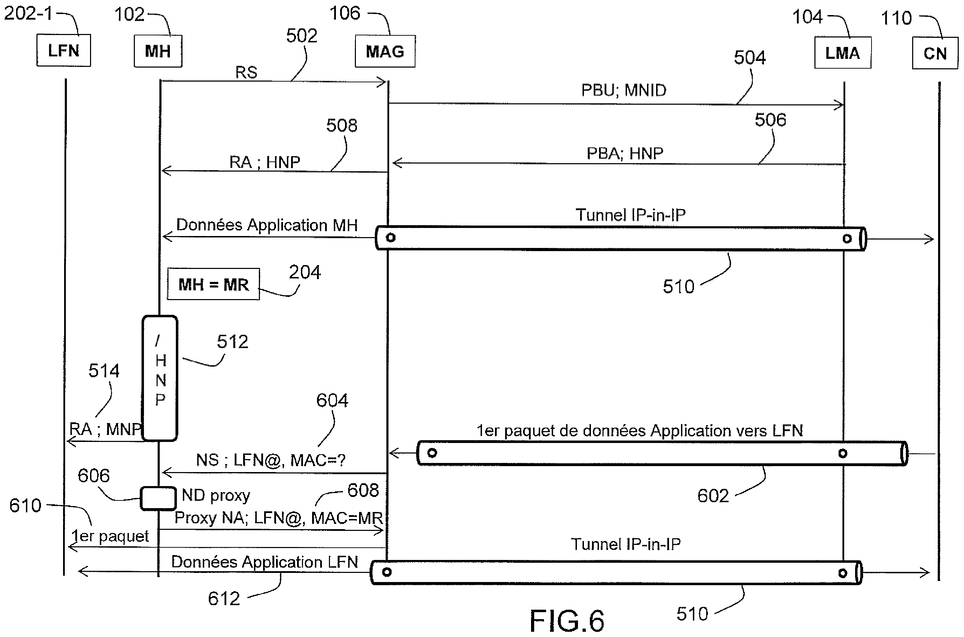

Dans une première étape, le Routeur Mobile (MR) divise le HNP tel que reçu du LMA en deux parties : une première partie pour former une adresse pour lui-même et une deuxième partie pour former des préfixes pour les LFNs. Dans une étape suivante, un procédé de transmission de paquets est opéré selon des modes alternatifs comme il sera décrit en détail en référence avec les figures 5 et 6.

L'exemple de la figure 3 pour des raisons de simplification de la description montre un HNP dont l'adresse est encodée sur 5 bits (11000). Cependant l'homme de l'art comprendra que la méthode décrite est applicable quelque soit la longueur des adresses, comme une longueur de 64 ou 128 bits.

L'entité LMA attribue un HNP longueur 2 noté «HNP /2 ». Dans le contexte de la RFC5213 PMIPv6, cette longueur est attribuée à l'aide du message PBA, dans le champ « Length » de l'option « Home Network Prefix Option ». Le routeur mobile MR tourne un procédé qui divise le « HNP /2 » en une première adresse A1 (11001/5) pour lui-même et en deux préfixes « P1 /4 » de longueur 4 (1101) et « P2 /3 » de longueur 3 (111).

Ultérieurement, le routeur mobile MR annonce dans une procédure d'échange de messages les préfixes P1 et P2 vers les LFNs. Les LFNs utilisent ces préfixes pour former des adresses pour LFN, en rajoutant un identificateur d'interface du LFN au préfixe reçu du MR. Le routeur mobile MR ajoute dans sa table de routage les entrées correspondantes pour P1 et P2 par rapport à son interface entrante vers les LFN, et les entrées pour A1 par rapport à son interface sortante vers le MAG. Cette méthode de formation d'adresse par MR avec LFN (MR annonce un préfixe au LFN, LFN forme l'adresse en rajoutant un identificateur au préfixe), est connue sous le nom de « Stateless Address Autoconfiguration ou SLAAC en anglais » et est décrite dans le standard RFC 4862.

Alternativement au SLAAC, le Routeur Mobile MR peut utiliser les préfixes P1 et P2 pour former plusieurs adresses complètes (de longueur 5) et ensuite les distribuer aux LFNs à l'aide du protocole DHCPv6 RFC 3315, méthode qui est connue sous le nom de « Stateful Address Autoconfiguration en anglais ».
La méthode de division de préfixe de la présente invention est applicable à tout système d'adressage dont l'adresse à une longueur fixe et Tapez une équation ici.utilisant un algorithme de recherche dans les tables de routage tel que l'algorithme « Longest Prefix Patch en anglais ». Ainsi, la méthode s'applique pour une longueur de préfixe HNP comprise entre 1 et [longueur d'adresse - 1]. Par exemple, dans le cas d'adresse IPv6 de longueur 128 bits, la méthode opère pour un HNP dont la longueur peut varier entre 1 et 127.
Pour une longueur HNP /x, la plus courte longueur du MNP obtenu après application de la méthode de l'invention est /x+1, tandis que la plus longue est la longueur totale d'adresse. Ainsi pour des adresses IPv6 sur 128 bits et une longueur de HNP /64, le plus court MNP obtenu par division du HNP est de longueur /65 tandis que le plus long MNP obtenu est de longueur /128.
Pour un système d'adressage avec adresses de longueur L, la division d'un préfixe de longueur /H (H plus petit que L) peut offrir entre 2 et 2*^{L-H}* MNPs simultanément. La longueur de chacun de ces préfixes MNP peut être entre H+1 et L. Aucune longueur des préfixes ne peut être plus petite que H+1 ou plus grande que L.

Ainsi dans l'exemple choisi illustré en figure 3, les adresses A2 (11010) et A3 (11011) de préfixe « P1 /4 » ainsi que les adresses A4 (11100) à A7 (11111) de préfixes « P2 /3 » sont utilisables pour les LFNs présents dans le réseau mobile.

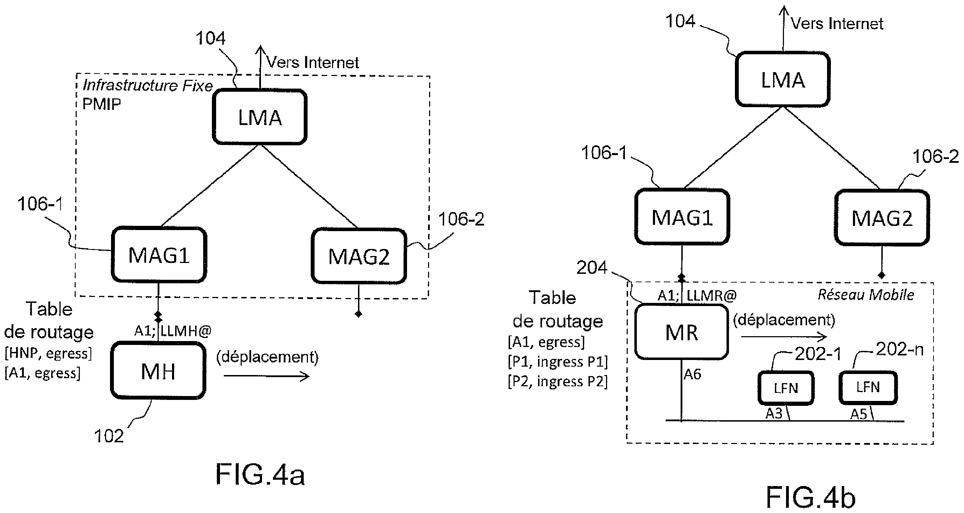

Les figures 4a et 4b illustrent respectivement les entrées dans la Table de Routage pour une topologie classique PMIP avec Terminal Mobile Host (MH Routing Table) en Fig.4a et pour une topologie de réseau mobile avec Routeur Mobile (MR Routing Table) et LFNs en Fig.4b. La Figure 4b s'appuie sur l'exemple de la division « HNP /2 » de la figure 3.

La table de routage du MH en environnement PMIP contient des paires de type [prefix, next-hop]. Le contenu d'une paire indique qu'un paquet de données à transmettre dont l'adresse de destination peut être associée à la valeur du « prefix » doit être transmis à la destination contenue à la valeur du « next-hop ».

Comme montré sur la figure 4a, la table de routage du MH contient le HNP associé à une valeur d'egress dans l'infrastructure standard PMIP/MH. Sur la figure 4b qui illustre l'utilisation de la méthode de division du HNP de la présente invention, la table de routage du MR ne contient plus le HNP mais trois autres entrées : [A1, egress], [P1, ingressP1] et [P2, ingressP2] relatives respectivement à l'adresse A1 et aux préfixes P1 et P2.

La figure 4b illustre au moins deux LFNs du réseau mobile qui vont utiliser les adresses A3 et A5 dérivées de P1 et P2 respectivement.

Ainsi avec l'exemple de la figure 3, la table de routage MR contiendra les valeurs [11001/5, egress] [1101/4, egressP1] et [111/3, egressP2].

Comme indiqué plus haut, après l'étape de division du HNP, la transmission de paquets peut s'effectuer selon des procédés variables. Deux variantes de transmission sont décrites où soit le Terminal Mobile (MR) utilise un mécanisme de transmission de type routage au niveau IP (figure 5), ou bien un mécanisme de type répétition au niveau lien (figure 6). La transmission de type routage au niveau IP utilise des liens de type point-à-point entre MAG (106) et MH (102). La transmission de type répétition au niveau lien utilise des liens de type « partagé » entre MAG (106) et MH (102). Un exemple de lien type point-à-point est le lien UMTS (3GPP, LTE) et un exemple de lien type « partagé » est Ethernet (WiFI, autre). Le lien de type UMTS est utilisé dans des déploiements cellulaires, opérateur de téléphonie mobile. Le lien de type Ethernet est utilisé dans des déploiements de type HotSpot.

La Figure 5 montre sous un schéma de type flot de données, un premier exemple d'échange avec lien point-à-point opérant selon les principes de la présente invention. Comme expliqué précédemment, aucune modification n'est apportée sur les entités existantes de l'infrastructure PMIP, en particulier sur les entités LMA et MAG. L'échange point-à-point est un échange aussi connu par le protocole de tunnelisation niveau 2 « Layer 2 Tunneling Protocol ou L2TP en anglais » qui combine les fonctionnalités du protocole « Layer 2 Forwarding ou L2F en anglais » et du protocole « Point-to-Point Tunneling Protocol ou PPTP en anglais ». Un autre protocole est le « PPP » spécifié par la RFC1661 et le « IP Version 6 over PPP » spécifié dans la RFC5072.

Dans ce type d'échange, les entrées dans les tables de routage des MAG sont sous la forme de paires [HNP, LLMR@] où « LLMR@ » désigne l'adresse du routeur mobile local au lien ou « Link-Local Mobile Router's Address en anglais ».

Dans une étape initiale (502), le terminal mobile (102) procède à une sollicitation de routeur en envoyant à une entité MAG (106) un message de sollicitation de routeur « Routeur Solicitation ou RS en anglais ». Le message est reçu par le MAG (106) qui envoie à l'étape (504) un message « Proxy Binding Update PBU » vers une entité LMA (104) avec un identifiant du terminal mobile demandeur, un « Mobile Node Identifier ou MNID en anglais ».

Dans une étape suivante (506) le LMA 104 alloue un HNP pour l'identifiant (MNID), et procède à un enregistrement de ces données en mettant à jour ses tables de routage par rapport à cet identifiant (MNID), le HNP alloué et le MAG sollicitant (106). Le LMA répond au MAG en envoyant un message de « Proxy Binding Acknowledgement ou PBA en anglais » contenant le Home Network Prefix alloué.

A réception, le MAG met à jour ses tables par rapport à l'identifiant (MNID), le HNP alloué et le LMA. Puis à l'étape (508) le MAG retourne au terminal mobile (102) un message de « Routeur Advertisement RA » contenant le HNP attribué par le LMA.

Ensuite, le MH (102) utilise une méthode d'auto-configuration pour configurer sa propre adresse. En environnement IPv6, une méthode telle que définie dans la RFC4862 est connue sous la dénomination "Stateless Address Auto-configuration" pour configurer une adresse IPv6 nommée « Mobile Router Home Address ou MR_HoA en anglais ».
À ce stade, toute communication directe et bidirectionnelle, initiée par MH (102) ou par un noeud correspondant CN (110) est possible. Cette communication est encapsulée dans un tunnel IP-en-IP « IP-in-IP en anglais » (510).
Les champs source et destination de cette communication sont MH (102) et CN (110), et les champs source et destination du tunnel IP-en-IP sont LMA (104) et MAG (106).

Un tunnel de communication (510) est établi entre le MAG (106) et le LMA (104) qui permet au terminal mobile (102) d'échanger des flots de données en provenance d'un noeud correspondant CN (110) situé dans l'environnement réseau, à l'extérieur du domaine PMIP.

La communication entre un LFN (202) et CN (110) n'est pas possible car comme expliqué précédemment un LFN n'a pas encore une adresse IP qui soit topologiquement correcte, et le cas échéant le LMA (104) et le MAG (106) ne sont pas configurés pour avoir connaissance d'une telle adresse afin de transmettre des paquets de données vers un LFN (202).

Afin de permettre l'acheminement des données vers les équipements utilisateurs finaux LFN (202), le terminal mobile va se configurer (512) pour opérer comme un routeur mobile que l'on nomme MR (204). Le HNP est divisé en une « Home Adress » (HoA) pour le terminal/Routeur mobile (102/204) que l'on nomme une « MR-HoA » et en deux préfixes (P1, P2) de longueur prédéfinie (L1, L2) pour les LFNs.

La longueur de la « Home Adress » est préférentiellement égale à la longueur d'encodage des adresses du réseau PMIP. Ainsi en PMIPv6, où les adresses sont encodées sur 128 bits, la longueur de la « Home Adress » du Terminal/Routeur mobile est de 128 bits.

L'un des deux préfixes générés est un « Mobile Network Prefix ou MNP en anglais » qui va être utilisé par un LFN (202).

Le routeur mobile (MR) met à jour ses tables de routage par rapport à la Home Address et aux deux préfixes P1 et P2 de manière à ce que P1 et P2 soient annoncés vers les LFN sur une ou deux interfaces ingress, et que la Home Adress soit utilisée seulement comme adresse source des seules applications exécutées sur MR.

A l'étape suivante (514), le routeur mobile MR (102) envoie un ou plusieurs messages RA « Router Advertisement » sur une ou 2 interfaces ingress, contenant les préfixes MNP pour les LFNs.

À la réception du message RA, un LFN (202) effectue une procédure d'auto-configuration pour se générer une adresse IP. Préférentiellement, en IPv6, la procédure est la procédure connue comme « Stateless Address Auto-configuration ».

Une fois l'adresse IP générée, la communication bidirectionnelle (516) de données d'application entre le CN (110) et le LFN (202) est possible. Il n'y a pas eu de nouveau message PMIP créé, ni de modification sur les messages PMIP existants.

L'adresse du LFN (202) faisant partie du préfixe extrait du HNP, les tables de LMA (104) et MAG (106) connaissent implicitement la position topologique de cette adresse par exécution d'un algorithme connu de « Longest Prefix Match en anglais ».

La Figure 6 montre sous un schéma de type flot de données, un second exemple d'échange de liens partagés « shared links en anglais » opérant selon les principes de la présente invention. Dans cet exemple, le mécanisme d'échange des données est de type « Neighbor Discovery proxy ou ND proxy en anglais ».

Dans ce type d'échange, les entrées dans les tables de routage des MAG sont sous la forme de paires génériques [HNP, *] appelée parfois « connected route en anglais ».

La procédure initiale d'obtention de HNP est identique à celle décrite pour la figure 5, et n'est pas décrite de nouveau, les mêmes références étant conservées tant pour les entités (202-1, 102, 104, 106, 110) que pour les étapes de la procédure de (502) à (514).

Ensuite quand le MAG reçoit un paquet de données (602) provenant du LMA destiné à un LFN, il initie (604) un message de sollicitation de voisinage « Neighbor Solicitation ou NS en anglais » pour récupérer l'adresse « MAC » de la destination. Cette information est utile pour s'assurer que la destination est bien connectée directement au MAG. Le routeur mobile (MR) agit comme un LFN en répondant directement au MAG en insérant sa propre adresse MAC dans le message de réponse (*proxy* neighbor advertisement). Ainsi, MR consiste à faire croire au MAG que les adresses IPv6 utilisées par le ou les LFNs proviennent de la même adresse MAC, i.e., celle du MR.

Dans une variante d'implémentation, il est possible d'intégrer un procédé de basculement dynamique pour le routeur mobile (MR) entre les deux types d'échange de données (routage et ND proxy). Le procédé permet au routeur mobile (MR) de détecter quel type d'entrée est utilisée par le MAG, entrées de type [HNP, LLMR@] ou entrées génériques de type [HNP, *]. Selon le type d'entrée détectée, le routeur se comporte soit comme un routeur classique ou soit comme un « ND proxy ».

Pour détecter le type d'entrée, le (MR) écoute sur son interface egress les messages. Si l'un des messages est un « Neighbor Solicitation » qui contient dans le champ « destination » une adresse correspondant au préfixe MNP obtenu à l'étape (512) par la division HNP, alors MR considère que le MAG utilise une entrée générique de type [HNP, *]. Le (MR) exécute alors la procédure « ND proxy » des étapes 602 à 612 et répond à toute demande de message NS émise par le MAG pour une adresse du LFN en offrant sa propre adresse MAC.

Si le (MR) ne reçoit pas de message « Neighbor Solicitation » pendant une période de temps prédéfinie alors le (MR) considère que le MAG utilise des entrées de type [HNP, LLMR@] et exécute la procédure précédemment décrite en figure 5.

Il est intéressant de rappeler quelques avantages majeurs de la solution proposée. Le MH devenant routeur mobile MR permet le support des réseaux mobiles. Aucune modification n'est requise sur les entités du réseau coeur, ce qui a l'avantage opérationnel de pouvoir continuer à utiliser le protocole PMIPv6 ainsi que les configurations d'adressage déjà installées. Il n'y a pas de nouvelles entités à installer, à configurer et à maintenir. La présente invention consiste à développer des extensions sur MH exclusivement pour le faire opérer en routeur mobile et ainsi utiliser au moins deux interfaces IP.

La présente invention peut s'implémenter à partir d'éléments matériel et/ou logiciel. Elle peut être disponible en tant que produit programme d'ordinateur sur un support lisible par ordinateur.

Le support peut être électronique, magnétique, optique, électromagnétique ou être un support de diffusion de type infrarouge. De tells supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Méthode pour gérer la mobilité d'un réseau mobile (202) opérant dans un environnement Proxy Mobile IP (PMIP) comprenant au moins un point d'attachement (104) et un routeur d'accès (106), ledit réseau mobile (202) comprenant un terminal mobile (102, 204) en communication avec au moins un équipement utilisateur (202_1), la méthode comprenant les étapes suivantes:
- établir (510) un tunnel de communication IP-en-IP entre lesdits au moins un point d'attachement et routeur d'accès permettant l'échange de données entre le terminal mobile (102) et un noeud correspondant (110) de l'environnement PMIP, le tunnel de communication attribuant un « Home Network Prefix » (HNP) au terminal mobile ;
- diviser (512) le Home Network Prefix attribué en une première partie pour former une « Home Adress » (HoA) pour le terminal mobile (102, 204), et en une ou plusieurs autres parties pour générer un ou plusieurs préfixes (P1,P2), l'un des préfixes définissant un « Mobile Network Prefix » (MNP) attribué au terminal mobile (102,204); et
- annoncer (514) le « Mobile Network Prefix » généré vers ledit au moins un équipement utilisateur (202_1) de manière à permettre l'échange de données (516, 612) entre ledit au moins un équipement utilisateur (202_1) et le noeud correspondant (110) par ledit tunnel de communication IP-en-IP.

2. La méthode selon la revendication 1 dans laquelle l'étape (510) d'établir un tunnel de communication PMIP comprend les étapes de :
- émettre (502) un message (RS) de sollicitation d'attachement du terminal mobile (102) audit au moins un routeur d'accès (106); et
- recevoir (508) du routeur d'accès un message (RA) contenant un « Home Network Prefix » pour le terminal mobile.

3. La méthode selon la revendication 2 comprenant après l'étape d'émission (502) l'étape de:
- signaler (504) la présence du terminal mobile audit au moins un point d'attachement (104) par un message de « Proxy Binding Update » (PBU); et
- recevoir (506) du audit au moins un point d'attachement un message de confirmation « Proxy Binding Acknowledgement » (PBA) contenant le « Home Network Prefix » pour le terminal mobile (102).

4. La méthode selon l'une quelconque des revendications 1 à 3 dans laquelle l'étape de division (512) comprend les étapes de:
- identifier si l'adresse du routeur d'accès dans le message (RA) contenant le « Home Network Prefix » est de type « Link-Local Mobile Router's Adress » (LLMR@); et si oui
- mettre à jour la table de routage du terminal mobile (102, 204) avec la « Home Adress » et lesdits préfixes (P1,P2).

5. La méthode selon la revendication 4 comprenant l'étape suivante, si l'adresse du routeur d'accès n'est pas de type (LLMR@):
- initier (604) un message de sollicitation de voisinage (NS) pour obtenir l'adresse « MAC » de la destination.

6. La méthode selon l'une quelconque des revendications 1 à 5 dans laquelle l'étape (514) d'annonce comprend l'étape d'envoyer un message (RA) de « Router Advertisement » comprenant le MNP vers ledit au moins un équipement utilisateur (202_1).

7. La méthode selon l'une quelconque des revendications 1 à 6 dans laquelle l'environnement Proxy Mobile IP est un environnement PMIPv6.

8. La méthode selon l'une quelconque des revendications 1 à 7 dans laquelle ladite « Home Adress » est de longueur égale à la longueur d'encodage des adresses du réseau PMIP.

9. La méthode selon l'une quelconque des revendications 1 à 8 dans laquelle ledit au moins un équipement utilisateur appartient au groupe des équipements (ordinateur portable, tablette PC, téléphone portable).

10. Un système pour gérer la mobilité d'un réseau mobile (202) opérant dans un environnement Proxy Mobile IP (PMIP), ledit réseau mobile (202) comprenant un terminal mobile (102) en communication avec au moins un équipement utilisateur (202_1), le système comprenant des moyens pour mettre en oeuvre les étapes de la méthode selon l'une quelconque des revendications 1 à 9.

11. Un terminal mobile (102) apte à communiquer avec au moins un équipement utilisateur (202_1) dans un environnement Proxy Mobile IP (PMIP), le terminal mobile comprenant le système selon la revendication 10.

12. Un produit programme d'ordinateur, ledit programme d'ordinateur comprenant des instructions de code permettant d'effectuer les étapes de la méthode selon l'une quelconque des revendications 1 à 9, lorsque ledit programme est exécuté sur un ordinateur.

## Patentansprüche

1. Verfahren zum Management der Mobilität eines Mobilfunknetzes (202), das in einer Umgebung Proxy Mobile IP (PMIP) betrieben wird, umfassend mindestens einen Anbindungspunkt (104) und einen Zugangsrouter (106), das Mobilfunknetz (202) umfassend ein Mobilgerät (102, 204) in Kommunikation mit mindestens einem Benutzergerät (202_1), das Verfahren umfassend die folgenden Schritte:
- Herstellen (510) eines Kommunikationstunnels IP-in-IP zwischen dem mindestens einen Anbindungspunkt und Zugangsrouter, um den Datenaustausch zwischen dem Mobilgerät (102) und einem dazugehörigen Knoten (110) der Umgebung PMIP zu ermöglichen, wobei der Kommunikationstunnel dem Mobilgerät ein "Home Network Prefix" (HNP) zuweist;
- Teilen (512) des zugewiesenen Home Network Prefix in einen ersten Teil, um eine "Home Adress" (HoA) für das Mobilgerät (102, 204) zu bilden, und in einen oder mehrere andere Teile, um ein oder mehrere Präfixe (P1,P2) zu erzeugen, wobei der eine der Präfixe ein "Mobile Network Prefix" (MNP) definiert, der dem Mobilgerät (102,204) zugewiesen wird; und
- Ankündigen (514) des erzeugten "Mobile Network Prefix" an das mindestens eine Benutzergerät (202_1), um den Datenaustausch (516, 612) zwischen dem mindestens einen Benutzergerät (202_1) und dem dazugehörigen Knoten (110) über den Kommunikationstunnel IP-in-IP zu ermöglichen.

2. Verfahren nach Anspruch 1, wobei der Schritt (510) zum Herstellen eines Kommunikationstunnels PMIP die folgenden Schritte umfasst:
- Ausgeben (502) einer Nachricht (RS) der Anbindungsanforderung des Mobilgeräts (102) an dem mindestens einen Zugangsrouter (106); und
- Empfangen (508) einer Nachricht (RA) vom Zugangsrouter, die ein "Home Network Prefix" für das Mobilgerät enthält.

3. Verfahren nach Anspruch 2, umfassend nach dem Ausgabeschritt (502) den folgenden Schritt:
- Signalisieren (504) der Anwesenheit des Mobilgeräts an dem mindestens einen Anbindungspunkt (104) durch eine Nachricht "Proxy Binding Update" (PBU); und
- Empfangen (506) einer Bestätigungsnachricht "Proxy Binding Acknowledgement" (PBA) von dem mindestens einen Anbindungspunkt, die das "Home Network Prefix" für das Mobilgerät (102) enthält.

4. Verfahren nach einem der vorherigen Ansprüche 1 bis 3, wobei der Teilungsschritt (512) die folgenden Schritte umfasst:
- Identifizieren, ob die Adresse des Zugangsrouters in der Nachricht (RA), die das "Home Network Prefix" enthält, vom Typ "Link-Lokal Mobile Router's Adress" (LLMR@) ist; und wenn ja
- Aktualisieren der Weiterleitungstabelle des Mobilgeräts (102, 204) mit der "Home Adress" und den Präfixen (P1,P2).

5. Verfahren nach Anspruch 4 umfassend den folgenden Schritt, wenn die Adresse des Zugangsrouters nicht vom Typ (LLMR@) ist:
- Initiieren (604) einer Nachricht der Annäherungsanforderung (NS), um die Adresse "MAC" des Ziels zu erlangen.

6. Verfahren nach einem der Ansprüche 1 bis 5, wobei der Schritt (514) der Ankündigung den Schritt zum Senden einer Nachricht (RA) "Router Advertisement" umfassend den MNP an das mindestens eine Benutzergerät (202_1) umfasst.

7. Verfahren nach einem der Ansprüche 1 bis 6, wobei die Umgebung Proxy Mobile IP eine Umgebung PMIPv6 ist.

8. Verfahren nach einem der vorherigen Ansprüche 1 bis 7, wobei die "Home Adress" die gleiche Länge wie die Codierungslänge der Adressen des PMIP-Netzwerks hat.

9. Verfahren nach einem der vorherigen Ansprüche 1 bis 8, wobei das mindestens eine Benutzergerät zur Gerätegruppe (Laptop, Tablet-PC, Mobiltelefon) gehört.

10. System zum Management der Mobilität eines Mobilfunknetzes (202), das in einer Umgebung Proxy Mobile IP (PMIP) betrieben wird, das Mobilfunknetz (202) umfassend ein Mobilgerät (102) in Kommunikation mit mindestens einem Benutzergerät (202_1), das System umfassend Mittel, um die Schritte des Verfahrens nach einem der Ansprüche 1 bis 9 umzusetzen.

11. Mobilgerät (102), das geeignet ist, mit mindestens einem Benutzergerät (202_1) in einer Umgebung Proxy Mobile IP (PMIP) zu kommunizieren, das Mobilgerät umfassend das System nach Anspruch 10.

12. Computerprogrammprodukt, das Computerprogramm umfassend Codeanweisungen, die es ermöglichen, die Schritte des Verfahrens nach einem der Ansprüche 1 bis 9 durchzuführen, wenn das Programm auf einem Computer ausgeführt wird.

## Claims

1. A method for managing the mobility of a mobile network (202) operating in a Proxy Mobile IP (PMIP) environment comprising at least one attachment point (104) and one access router (106), said mobile network (202) comprising a mobile terminal (102, 204) communicating with at least one user device (202_1), said method comprising the following steps:
- establishing (510) an IP-in-IP communication tunnel between said at least one attachment point and access router allowing data to be exchanged between said mobile terminal (102) and a corresponding node (110) of said PMIP environment, said communication tunnel assigning a Home Network Prefix (HNP) to said mobile terminal;
- dividing (512) the assigned Home Network Prefix into a first section in order to form a Home Address (HoA) for said mobile terminal (102, 204) and into one or more other sections for generating one or more prefixes (PI, P2), one of said prefixes defining a Mobile Network Prefix (MNP) assigned to said mobile terminal (102, 204); and
- advertising (514) the generated Mobile Network Prefix to said at least one user device (202_1) so as to allow data (516, 612) to be exchanged between said at least one user device (202_1) and said corresponding node (110) via said IP-in-IP communication tunnel.

2. The method according to claim 1, wherein said step (510) of establishing a PMIP communication tunnel comprises the following steps:
- transmitting (502) a message (RS) for soliciting the attachment of said mobile terminal (102) to said at least one access router (106); and
- receiving (508) a message (RA) from said access router that contains a Home Network Prefix for said mobile terminal.

3. The method according to claim 2, comprising, after said transmission step (502), the following step:
- reporting (504) the presence of said mobile terminal to said at least one attachment point (104) by a Proxy Binding Update (PBU) message; and
- receiving (506) a Proxy Binding Acknowledgement (PBA) confirmation message from said at least one attachment point containing the Home Network Prefix for said mobile terminal (102).

4. The method according to any one of claims 1 to 3, wherein said division step (512) comprises the following steps:
- identifying whether the address of the access router in said message (RA) containing the Home Network Prefix is of the Link-Local Mobile Router's Address" (LLMR@) type; and, if so,
- updating the routing table of said mobile terminal (102, 204) with the Home Address and said prefixes (PI, P2).

5. The method according to claim 4, comprising the following step, if the address of said access router is not of the (LLMR@) type:
- initiating (604) a Neighbour Solicitation (NS) message in order to obtain the MAC address of the destination.

6. The method according to any one of claims 1 to 5, wherein said advertising step (514) comprises said step of sending a Router Advertisement (RA) message comprising the MNP to said at least one user device (202_1).

7. The method according to any one of claims 1 to 6, wherein said Proxy Mobile IP environment is a PMIPv6 environment.

8. The method according to any one of claims 1 to 7, wherein said Home Address is of equal length to the encoding length of the addresses of the PMIP network.

9. The method according to any one of claims 1 to 8, wherein said at least one user device belongs to the following group of devices: laptop computer, tablet PC, mobile telephone.

10. A system for managing the mobility of a mobile network (202) operating in a Proxy Mobile IP (PMIP) environment, said mobile network (202) comprising a mobile terminal (102) communicating with at least one user device (202_1), said system comprising means for implementing the steps of the method according to any one of claims 1 to 9.

11. A mobile terminal (102) capable of communicating with at least one user device (202_1) in a Proxy Mobile IP (PMIP) environment, said mobile terminal comprising the system according to claim 10.

12. A computer program product, said computer program comprising code instructions for carrying out the steps of the method according to any one of claims 1 to 9, when said program is executed on a computer.
